(19) Europäisches Patentamt
European Patent Office
Office européen des brevets

(11) **EP 2 470 916 B1**

(12) **FASCICULE DE BREVET EUROPEEN**

(45) Date de publication et mention
de la délivrance du brevet:
**28.10.2015 Bulletin 2015/44**

(51) Int Cl.:
***G01P 3/36*** *(2006.01)*      ***G01S 17/58*** *(2006.01)*
***G01P 3/44*** *(2006.01)*

(21) Numéro de dépôt: **10762966.9**

(22) Date de dépôt: **04.08.2010**

(86) Numéro de dépôt international:
**PCT/FR2010/051650**

(87) Numéro de publication internationale:
**WO 2011/023878 (03.03.2011 Gazette 2011/09)**

(54) **MESURE D'UNE VITESSE DE DEPLACEMENT D'UN ELEMENT MOBILE**

MESSUNG DER FAHRGESCHWINDIGKEIT EINES MOBILEN ELEMENTS

MEASURING THE TRAVELING SPEED OF A MOBILE ELEMENT

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **24.08.2009 FR 0955765**

(43) Date de publication de la demande:
**04.07.2012 Bulletin 2012/27**

(73) Titulaire: **Airbus Defence and Space SAS
78130 Les Mureaux (FR)**

(72) Inventeur: **PASTERNAK, Frédérick
F-31590 Gaure (FR)**

(74) Mandataire: **Cabinet Plasseraud
52, rue de la Victoire
75440 Paris Cedex 09 (FR)**

(56) Documents cités:
**GB-A- 1 307 431      GB-A- 2 236 178
GB-A- 2 261 299      JP-A- 61 062 885
US-A- 6 133 993**

**Description**

La présente invention concerne un procédé pour mesurer une vitesse de déplacement d'un élément mobile.

De nombreux appareils ont des fonctions qui nécessitent de connaître une vitesse de déplacement d'un élément mobile. Par exemple, lorsqu'un télescope est associé à un dispositif de pointage variable à bord d'un satellite, il peut être nécessaire de connaître avec précision la vitesse de déplacement de la partie mobile du système de pointage.

Pour cela, des systèmes sont couramment utilisés, qui déterminent la vitesse de déplacement à partir de mesures successives d'une coordonnée de position de l'élément mobile. Une unité informatique calcule alors les valeurs de la vitesse en réalisant une opération de dérivation par rapport au temps de valeurs de la coordonnée de position qui sont mesurées à des instants successifs.

Il est aussi connu, notamment du document GB 2 261 299, de mesurer la coordonnée de position de l'élément mobile en utilisant des procédés optiques. En particulier, une telle mesure peut être réalisée en produisant une interférence lumineuse qui varie en fonction de la position de l'élément mobile. Dans ce cas, le système de mesure de la vitesse de déplacement de l'élément mobile peut comprendre :

- un premier miroir, qui est connecté à l'élément mobile de façon à être entraîné selon un premier déplacement de miroir pendant le déplacement de l'élément mobile;
- un second miroir ;
- une source, qui est adaptée pour produire un faisceau de rayonnement monochromatique ayant une intensité initiale de rayonnement ;
- des moyens adaptés pour produire une interférence entre une première partie du faisceau de rayonnement qui est réfléchie par le premier miroir et une seconde partie du faisceau de rayonnement qui est réfléchie par le second miroir ; et
- un détecteur, qui est disposé pour recevoir simultanément les première et seconde parties du faisceau de rayonnement, après que ces parties de faisceau ont été réfléchies respectivement sur les premier et second miroirs, et qui est adapté pour mesurer une intensité de rayonnement produite par l'interférence.

Les premier et second miroirs et les moyens pour produire l'interférence sont alors adaptés de sorte que des chemins optiques respectifs des première et seconde parties du faisceau de rayonnement, entre la source et le détecteur, aient des longueurs qui varient différemment lors du déplacement de l'élément mobile. Le déplacement de l'élément mobile produit ainsi lui-même une variation temporelle de l'intensité de rayonnement qui est mesurée par le détecteur, selon une première fréquence lorsque l'intensité initiale du faisceau de rayonnement produit par la source est constante. Les valeurs de la coordonnée de position de l'élément mobile aux instants successifs sont déduites des valeurs d'intensité de rayonnement qui sont mesurées par le détecteur à ces instants. La vitesse de déplacement de l'élément mobile est alors calculée comme un quotient d'une différence entre deux valeurs mesurées pour la coordonnée de position, par la durée écoulée entre les instants auxquels ces valeurs ont été mesurées.

Toutefois, une telle méthode peut être inadaptée pour certaines applications, notamment parce qu'elle nécessite que la position de l'élément mobile puisse être déterminée avec précision.

Par ailleurs, il est encore connu, notamment des documents JP 61 062885 et US 6,133,993, de déterminer la vitesse d'une cible directement à partir d'une mesure de la fréquence d'une onde qui est rétrodiffusée par cette cible. Une telle mesure procède en caractérisant le décalage Doppler qui est produit par la vitesse de la cible. Dans les systèmes de type LIDAR, pour «LIght Detection And Ranging» en anglais, ce décalage est déterminé en mélangeant l'onde qui est rétrodiffusée et recueillie avec l'onde d'émission. Le signal de détection LIDAR possède ainsi une composante dont la fréquence est égale au décalage Doppler. Mais dans ce cas, la fréquence de référence est directement celle de l'onde d'émission.

Enfin, il est aussi connu d'utiliser des systèmes LIDAR pour déterminer la distance d'éloignement de la cible. Dans ce cas, l'onde d'émission est elle-même modulée en fréquence, de sorte que le retard de propagation entre le système LIDAR et la cible corresponde à un décalage fréquentiel entre l'onde d'émission et l'onde rétrodiffusée qui est recueillie, lorsqu'elles sont mélangées pour un même instant dans le signal de détection LIDAR.

Mais ces systèmes LIDAR sont complexes, et ne sont pas adaptés pour mesurer des vitesses d'éléments mobiles qui sont faibles.

Dans ces conditions, un but de la présente invention est de proposer un nouveau procédé pour mesurer une vitesse de déplacement d'un élément mobile, qui ne présentent pas les inconvénients cités précédemment. Plus précisément, l'invention a pour but de fournir une détermination simple et directe de cette vitesse, sans nécessiter qu'une coordonnée de position de l'élément mobile soit d'abord déterminée.

Un autre but de l'invention consiste à fournir une mesure qui soit précise pour la vitesse de l'élément mobile, quelque soit l'ordre de grandeur de cette vitesse, et notamment même si elle est assez faible.

Pour cela, l'invention propose un procédé de mesure de la vitesse de déplacement de l'élément mobile, qui est adapté comme précédemment pour produire une interférence radiative qui varie en fonction de la position de l'élément mobile.

Dans un procédé conforme à l'invention, les variations de l'intensité de rayonnement qui est mesurée par le détecteur résultent simultanément du déplacement de l'élément mobile et de la modulation temporelle de l'intensité initiale du rayonnement produit par la source. Ces deux contributions se mélangent pour produire au moins une composante spectrale supplémentaire pour l'intensité de rayonnement qui est mesurée. Cette composante spectrale supplémentaire est associée à une nouvelle fréquence, égale à la différence entre, d'une part la fréquence de la variation de l'intensité mesurée qui résulte du déplacement de l'élément mobile seulement, dite première fréquence, et d'autre part la fréquence de modulation de la source du rayonnement, dite seconde fréquence. Cette nouvelle fréquence de composante spectrale est déterminée, et la vitesse de déplacement de l'élément mobile en est déduite ensuite.

Une telle détermination de la vitesse de déplacement ne procède pas par une détermination préalable d'une coordonnée de position de l'élément mobile. En ce sens, la vitesse de déplacement est déterminée directement. Autrement dit, l'invention procure une détermination directe de cette vitesse.

En outre, grâce à son fonctionnement qui est basé sur une interférence optique, un système de mesure conforme à l'invention peut être de dimensions très réduites pour provoquer un encombrement restreint, et être léger. Pour la même raison, il peut aussi produire un résultat de mesure de vitesse qui est très précis.

Cette précision est encore augmentée lorsque la fréquence selon laquelle l'intensité de la source est modulée, dite seconde fréquence, possède une valeur qui est proche de celle de la première fréquence, cette dernière résultant du déplacement de l'élément mobile.

L'invention propose un procédé selon la revendication 1.

Dans un tel procédé selon l'invention, des chemins optiques respectifs des première et seconde parties du faisceau de rayonnement ont des longueurs, entre la source et le détecteur, qui varient différemment lors du déplacement de l'élément mobile. De cette façon, le déplacement de l'élément mobile produit lui-même une variation de l'intensité qui est mesurée par le détecteur selon une première fréquence lorsque l'intensité initiale du faisceau de rayonnement produit par la source est constante.

Selon l'invention, le procédé comprend en outre les étapes suivantes :

/1/ pendant le déplacement de l'élément mobile: moduler l'intensité initiale du faisceau de rayonnement qui est produit par la source, selon une seconde fréquence, et activer simultanément le détecteur ; puis

/2/ déterminer la vitesse de déplacement de l'élément mobile à partir d'une composante spectrale de l'intensité de rayonnement qui est mesurée par le détecteur pendant le déplacement de l'élément mobile, cette composante spectrale étant associée à une différence entre la première et la seconde fréquence.

Selon une mise en oeuvre particulière d'un procédé selon l'invention, l'étape /2/ peut comprendre elle-même les sous-étapes suivantes :

/2-1/ filtrer un signal de mesure qui est produit par le détecteur, de façon à sélectionner la composante spectrale de l'intensité de rayonnement mesurée par le détecteur qui est associée à la différence entre la première et la seconde fréquence ;

/2-2/ calculer une transformation de Fourier du signal de mesure filtré, de façon à déterminer une distribution spectrale de ce signal de mesure filtré ; et

/2-3/ déterminer une fréquence centrale de cette distribution spectrale, qui est égale à la différence entre la première et la seconde fréquence.

La vitesse de déplacement de l'élément mobile peut alors être déduite de la fréquence centrale qui est déterminée à la sous-étape /2-3/.

Selon l'invention, la seconde fréquence, avec laquelle l'intensité initiale de la source est modulée, correspond à une valeur cible de la vitesse de déplacement de l'élément mobile. La vitesse de déplacement de l'élément mobile peut alors être asservie en fonction de la différence entre les première et seconde fréquences. Une commande particulièrement fine de la vitesse de déplacement peut ainsi être obtenue. Cette régulation de vitesse est en outre directe, en ce sens qu'elle ne procède pas par la détermination intermédiaire de la position de l'élément mobile.

Avantageusement, la vitesse de déplacement de l'élément mobile peut être asservie en fonction de la différence absolue entre la première fréquence et la seconde fréquence en utilisant un biais d'asservissement non nul. La régulation de la vitesse est alors symétrique entre des situations où la vitesse réelle de l'élément mobile est plus grande ou plus petite qu'une valeur cible qui est adoptée pour cette vitesse.

D'autres particularités et avantages de la présente invention apparaîtront dans la description ci-après d'un exemple de mise en oeuvre non limitatif, en référence à l'unique figure annexée introduite maintenant :

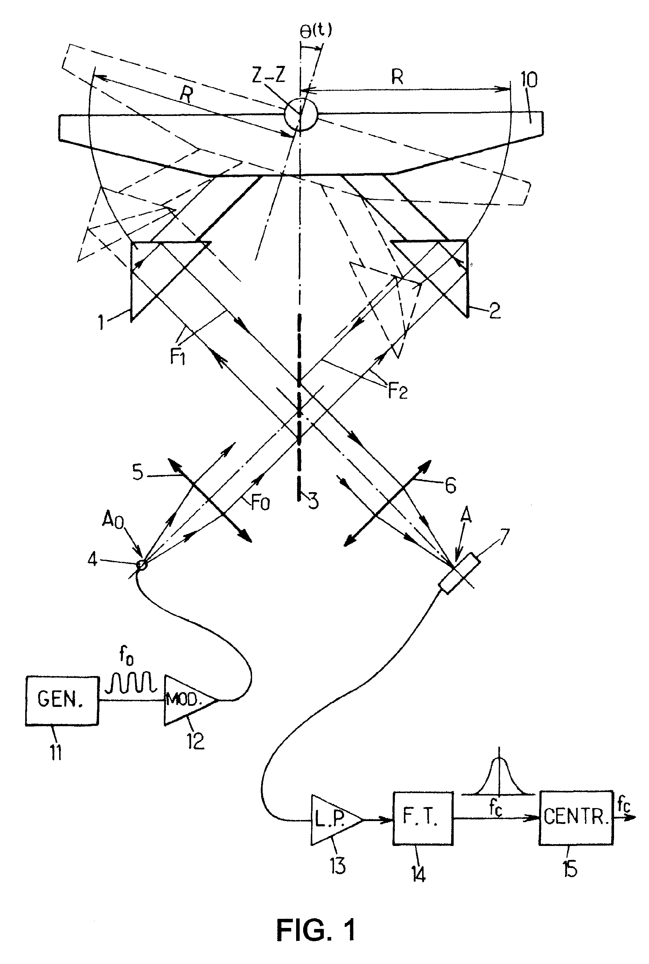

- la figure 1 est un schéma de principe d'un système de mesure de vitesse pour mettre en oeuvre le procédé selon l'invention.

De façon générale, l'invention peut être mise en oeuvre pour mesurer une vitesse de déplacement d'un élément mobile quelconque, et quelque soit le mouvement de déplacement cet élément. En particulier, lorsque l'élément mobile est animé d'un mouvement de translation ou de rotation, la vitesse qui est mesurée peut être une vitesse de translation linéaire ou une vitesse de rotation angulaire.

Une utilisation particulière de l'invention peut être la mesure d'une vitesse de balayage d'un champ d'entrée d'un télescope. Dans ce cas, l'élément mobile peut comprendre un miroir qui est disposé devant une entrée optique du télescope. Alternativement, il peut comprendre une partie d'un support orientable sur lequel est fixé le télescope. La vitesse de balayage du champ d'entrée du télescope est alors déduite de la vitesse de déplacement qui est déterminée pour l'élément mobile.

Conformément à la figure 1, l'élément 10 peut être mobile en rotation autour d'un axe Z-Z, qui est perpendiculaire au plan de la figure. Il est connecté à au moins un premier miroir du système de mesure qui est référencé 1. Le déplacement de l'élément 10 entraîne donc le miroir 1 selon un premier déplacement de miroir. θ(t) désigne l'angle de rotation de l'élément 10 autour de l'axe Z-Z. Il peut donc varier en fonction du temps, qui est noté t. Si la rotation de l'élément 10 est régulière pendant une certaine durée, alors θ(t) = ω.t, où ω est la vitesse angulaire de l'élément 10.

Le système de mesure comprend en plus un second miroir 2, qui peut être fixe ou mobile dans le cas général. Dans le mode de mise en oeuvre particulier de l'invention qui est décrit ici, le miroir 2 est aussi relié à l'élément mobile 10. De cette façon, le miroir 2 est entraîné selon un second déplacement de miroir pendant le déplacement de l'élément 10.

Par exemple, les miroirs 1 et 2 peuvent être disposés selon des directions radiales qui sont perpendiculaires à partir l'axe de rotation Z-Z.

Dans une mise en oeuvre préférée de l'invention, les miroirs 1 et 2 sont des miroirs rétro-réfléchissants qui sont connectés rigidement à l'élément mobile 10, à une même distance R de l'axe de rotation Z-Z. Dans ce cas, les miroirs 1 et 2 ont des déplacements respectifs qui sont différents, le long d'arcs circulaires distincts autour de l'axe Z-Z. La figure 1 montre deux positions de l'élément 10 et des miroirs 1 et 2, respectivement en traits pleins et en traits interrompus. Une telle configuration dans laquelle les deux miroirs sont entraînés par l'élément mobile 10 peut permettre d'augmenter la précision de la mesure de vitesse.

Dans des modes de réalisation particuliers de l'invention, les deux miroirs 1 et 2 peuvent être des miroirs en arêtes de cube ou des miroirs en coins de cube. Le principe de fonctionnement optique de tels miroirs rétro-réfléchissants est supposé connu de l'Homme du métier, et la figure 1 représente des trajets de rayons lumineux qui sont rétro-réfléchis par les miroirs 1 et 2 ayant une telle constitution.

Le système de mesure de vitesse comprend en outre une lame semi-réfléchissante 3 qui forme, avec les miroirs 1 et 2, un interféromètre de Michelson. Une source de rayonnement 4 produit un faisceau de rayonnement F0 qui est divisé en deux parties par la lame 3 : une partie de faisceau F1 est réfléchie par la lame 3 en direction du miroir 1, et simultanément une autre partie de faisceau F2 est réfléchie par la lame 3 en direction du miroir 2. Chaque partie de faisceau F1 ou F2 est ensuite rétro-réfléchie par le miroir 1 ou 2, respectivement, puis les deux parties de faisceau sont de nouveau superposées par la lame 3 de façon à produire une interférence. Grâce à la disposition des miroirs 1 et 2 à la même distance de l'axe Z-Z, les parties de faisceau F1 et F2 atteignent respectivement les miroirs 1 et 2 quelque soit l'angle θ(t) à l'intérieur d'un intervalle de variation de cet angle qui est large. Un détecteur 7 est disposé en outre pour mesurer une intensité du rayonnement qui résulte de l'interférence.

Un collimateur 5 peut être utilisé pour conférer une structure de faisceau parallèle au faisceau F0. Il est disposé entre la source 4 et la lame semi-réfléchissante 3. Une unité de focalisation 6 peut aussi être utilisée pour conjuguer optiquement le détecteur 7 avec la source 4 à travers l'interféromètre et le collimateur 5.

La source 4 peut être, par exemple, une diode à émission laser.

De façon connue, si la source 4 produit le faisceau F0 avec une intensité initiale de rayonnement $A_0$ qui est constante, le détecteur 7 reçoit une intensité de rayonnement A qui est déterminée par la formule (1) suivante :

$$A = A_0 \cdot [1 + \cos(2\Pi.opd/\lambda)]/2 \qquad (1)$$

où opd est la différence de longueur entre les chemins optiques qui sont suivis respectivement par les parties de faisceau F1 et F2, et $\lambda$ est la longueur d'onde du rayonnement produit par la source 4.

Pour la géométrie de l'élément mobile 10 et des miroirs 1 et 2 qui a été décrite plus haut : opd = 4.R.ω.t, et donc :

$$A = A_0 \cdot [1 + \cos(2\Pi. 4.R.\omega.t/\lambda)]/2 \qquad (2)$$

Le déplacement de l'élément mobile 10 produit donc lui-même, c'est-à-dire lorsque l'intensité initiale $A_0$ est constante, une variation de l'intensité A qui est reçue par le détecteur 7, à une fréquence apparente f égale à $4.R.\omega/\lambda$, dite première fréquence.

Selon l'invention, le rayonnement qui est produit par la source 4 est modulé en intensité, à une seconde fréquence qui est notée $f_0$, conformément à la formule suivante :

$$A_0 = \mathcal{A} . \cos(2\Pi . f_0. t + \varphi)] \qquad (3)$$

où $\mathcal{A}$ et $\varphi$ sont des constantes. Selon une méthode opératoire possible, un générateur de fréquence 11, noté GEN., produit un signal sinusoïdal de référence à la fréquence $f_0$. Ce signal de référence est transformé en un signal de modulation par un modulateur 12, qui est noté MOD.. Enfin, le signal de modulation est appliqué à une entrée de commande de la source 4, de sorte que le rayonnement du faisceau F0 possède une intensité qui est modulée selon la formule (3).

L'intensité de rayonnement qui est reçue par le détecteur 7 est alors conforme à la formule (2), en y reportant l'expression de l'intensité initiale modulée donnée par la formule (3). Elle possède plusieurs composantes spectrales, dont une composante continue éventuelle, une composante qui est située autour de la fréquence $|f-f_0|$, une composante à la fréquence $f_0$ et une composante qui est située autour de la fréquence $f+f_0$. $|f-f_0|$ désigne la valeur absolue de la différence entre la première fréquence f et la seconde fréquence $f_0$. La composante spectrale du signal de mesure produit par le détecteur 7 pendant le déplacement de l'élément mobile 10, qui possède la fréquence $|f-f_0|$ est alors sélectionnée. Pour cela, un filtre 13 peut être connecté à une sortie du détecteur 13, de façon à produire un signal filtré à partir du signal de mesure. Le filtre 13 peut être, par exemple, un filtre passe-bas (L.P. pour «Low Pass filter» en anglais) qui possède une fréquence de coupure inférieure à la fréquence $f_0$, lorsque la fréquence $f_0$ est sélectionnée pour être proche de la fréquence f. Des moyens de calcul de transformation de Fourier 14, notés F.T., sont agencés pour déterminer ensuite une distribution spectrale du signal filtré. Cette distribution spectrale comporte une raie qui peut posséder une largeur quelconque autour de la fréquence $|f-f_0|$. Une fréquence centrale de la raie à $|f-f_0|$, notée $f_C$, est enfin déterminée en utilisant une unité appropriée 15, notée CENTR.. Le résultat de la mesure de la vitesse de rotation de l'élément mobile 10 est alors :

$$\omega = (f_0 \pm f_C).\lambda/4R \qquad (4)$$

Le signe plus dans cette formule est sélectionné si la fréquence de référence $f_0$ est choisie inférieure à la fréquence f. Dans le cas contraire, la formule (4) est utilisée avec le signe moins. Selon une première méthode, le signe dans la formule (4) peut être sélectionné par une connaissance préalable à la mesure de la vitesse de rotation $\omega$, d'une valeur approximative ou d'un intervalle de valeurs pour cette vitesse. Une telle connaissance peut résulter du mode de mise en mouvement de l'élément 10, ou d'un dispositif annexe de mesure de la vitesse de rotation $\omega$, dont la précision est inférieure à celle du système de mesure de la présente invention. Selon une seconde méthode, une autre source modulée en intensité peut être combinée avec la source 4, avec une fréquence de modulation de l'autre source qui est différente de celle de la source 4. L'indétermination de signe dans la formule (4) peut alors être résolue en comparant les résultats de cette formule qui sont obtenus séparément pour chaque source.

La formule (4) peut aussi être écrite de la façon suivante :

$$\Delta\omega = |f - f_0|.\lambda/4R \qquad (5)$$

où $\Delta\omega$ est la différence absolue entre la vitesse angulaire réelle de la rotation de l'élément 10 et une valeur de référence $\omega_0$ pour cette vitesse de rotation, qui correspond à la fréquence $f_0$ : $\omega_0 = f_0.\lambda/4R$. La formule (5) montre alors que la précision de la mesure de la vitesse de déplacement de l'élément mobile 10 peut être augmentée lorsque la fréquence $f_0$ est choisie proche de la fréquence f. Elle est aussi augmentée lorsque la mesure est effectuée pendant une durée du déplacement de l'élément 10 qui est plus longue.

Selon l'invention, la fréquence de modulation $f_0$ de l'intensité de la source est sélectionnée de sorte que la valeur $\omega_0$ soit une valeur cible, ou valeur de consigne, pour la vitesse angulaire de rotation de l'élément 10. Dans ce cas, un asservissement de cette vitesse angulaire de rotation peut être obtenu à partir de l'écart par rapport à zéro de la fréquence $f_C$.

Alternativement, l'invention peut être utilisée pour contrôler la vitesse de déplacement de l'élément mobile 10, avec une valeur de consigne, ou valeur cible $\omega_{cible}$ pour cette vitesse qui n'est pas $f_0 \cdot \lambda/4R$, où $f_0$ est encore la fréquence de modulation d'intensité de la source 4. Autrement dit, l'asservissement de la vitesse de l'élément mobile 10 peut être effectué avec un biais. Pour cela, la valeur cible de la vitesse de rotation est $\omega_{cible}$ = (fo + $f_{offset}$)·$\lambda$/4R lorsque que le paramètre d'asservissement est l'écart de la différence absolue |f-$f_0$| par rapport à $f_{offset}$. $f_{offset}$ est alors appelé biais d'asservissement. L'avantage d'un tel asservissement est que si le biais est choisi avec une valeur un peu supérieure aux fluctuations de f, alors le signe de la différence f-$f_0$ ne varie pas. Ce signe constant peut alors être déterminé préalablement comme indiqué plus haut.

Il est entendu que l'invention peut être reproduite en modifiant des aspects secondaires de celle-ci, par rapport à la description détaillée qui vient d'être fournie. En particulier, la fréquence centrale $f_C$ de la composante spectrale à |f-$f_0$| du signal de mesure peut être déterminée de multiples façons, différentes de la méthode à base de transformation de Fourier qui a été citée à titre d'exemple.

**Revendications**

1. Procédé de mesure d'une vitesse de déplacement d'un élément mobile (10), comprenant les étapes suivantes :

   - connecter un premier miroir (1) à l'élément mobile de façon que ledit premier miroir soit entraîné selon un premier déplacement de miroir pendant le déplacement dudit élément mobile ;
   - disposer une source (4) pour produire un faisceau de rayonnement (F0) ayant une intensité initiale de rayonnement, et des moyens (3) pour produire une interférence entre une première partie (F1) dudit faisceau de rayonnement réfléchie par le premier miroir (1) et une seconde partie (F2) dudit faisceau de rayonnement réfléchie par un second miroir (2) ; et
   - disposer un détecteur (7) pour recevoir simultanément les première (F1) et seconde (F2) parties du faisceau de rayonnement, après que lesdites parties de faisceau ont été réfléchies respectivement par les premier et second miroirs, et de façon à mesurer une intensité de rayonnement produite par l'interférence ;

   de façon que des chemins optiques respectifs des première (F1) et seconde (F2) parties du faisceau de rayonnement aient des longueurs, entre la source (4) et le détecteur (7), variant différemment lors du déplacement de l'élément mobile (10), ledit déplacement de l'élément mobile produisant ainsi lui-même une variation de l'intensité mesurée par le détecteur selon une première fréquence lorsque l'intensité initiale ($A_0$) du faisceau de rayonnement (F0) produit par la source est constante ;
   ledit procédé étant **caractérisé en ce qu'**il comprend en outre les étapes suivantes :

   /1/ pendant le déplacement de l'élément mobile (10) : moduler l'intensité initiale ($A_0$) du faisceau de rayonnement (F0) produit par la source (4), selon une seconde fréquence ($f_0$), et activer simultanément le détecteur (7) ; puis
   /2/ déterminer la vitesse de déplacement de l'élément mobile (10) à partir d'une composante spectrale de l'intensité de rayonnement mesurée par le détecteur (7) pendant ledit déplacement de l'élément mobile, ladite composante spectrale étant associée à une différence entre ladite première fréquence et ladite seconde fréquence,

   et **en ce que** la seconde fréquence ($f_0$), avec laquelle l'intensité initiale de la source (4) est modulée, correspond à une valeur cible de la vitesse de déplacement de l'élément mobile (10), et suivant lequel ladite vitesse de déplacement de l'élément mobile est asservie en fonction de la différence entre ladite première fréquence et ladite seconde fréquence.

2. Procédé selon la revendication 1 suivant lequel le premier miroir (1), le second miroir (2) et les moyens (3) pour produire l'interférence forment un interféromètre de Michelson.

3. Procédé selon la revendication 1 ou 2, suivant l'étape /2/ comprend elle-même les sous-étapes suivantes :

   /2-1/ filtrer un signal de mesure produit par le détecteur (7), de façon à sélectionner la composante spectrale de l'intensité de rayonnement mesurée par ledit détecteur, associée à la différence entre la première fréquence et la seconde fréquence ;
   /2-2/ calculer une transformation de Fourier du signal de mesure filtré, de façon à déterminer une distribution spectrale dudit signal de mesure filtré; et
   /2-3/ déterminer une fréquence centrale ($f_C$) de ladite distribution spectrale, ladite fréquence centrale étant égale à la différence entre ladite première fréquence et ladite seconde fréquence.

**4.** Procédé selon l'une quelconque des revendications 1 à 3, utilisé pour mesurer la vitesse de déplacement de l'élément mobile (10) lorsque ledit élément mobile a un mouvement de rotation autour d'un axe (Z-Z).

**5.** Procédé selon la revendication 4, dans lequel le second miroir (2) est aussi connecté à l'élément mobile (10), de façon à être entraîné selon un second déplacement de miroir pendant le déplacement dudit élément mobile.

**6.** Procédé selon la revendication 5, dans lequel le premier miroir (1) et le second miroir (2) sont des miroirs rétro-réfléchissants connectés rigidement à l'élément mobile (10), à une même distance (R) de l'axe de rotation (Z-Z) dudit élément mobile.

**7.** Procédé selon la revendication 6, dans lequel le premier miroir (1) et le second miroir (2) sont des miroirs en arêtes de cube ou des miroirs en coins de cube.

**8.** Procédé selon l'une quelconque des revendications précédentes, suivant lequel l'élément mobile (10) comprend un miroir disposé devant une entrée optique d'un télescope, ou comprend une partie d'un support orientable sur lequel est fixé le télescope, l'étape /2/ dudit procédé permettant de déduire une vitesse de balayage d'un champ d'entrée du télescope.

**9.** Procédé selon l'une quelconque des revendications précédentes, suivant lequel la vitesse de déplacement de l'élément mobile (10) est asservie en fonction de la différence absolue entre la première fréquence et la seconde fréquence ($f_0$) en utilisant un biais d'asservissement $f_{offset}$ non nul, de sorte qu'une valeur cible $\omega_{cible}$ pour la vitesse de déplacement de l'élément mobile (10) est $\omega_{cible} = (fo + f_{offset})\cdot\lambda/4R$ lorsque que le paramètre d'asservissement est l'écart de la différence absolue $|f-f_0|$ par rapport à $f_{offset}$.

## Patentansprüche

**1.** Verfahren zur Messung der Fahrgeschwindigkeit eines mobilen Elements (10), umfassend folgende Schritte:

- Anschließen eines ersten Spiegels (1) an das mobile Element, so dass der erste Spiegel gemäß einer ersten Spiegelverlagerung während der Fahrt des mobilen Elements mitgenommen wird;
- Anordnen einer Quelle (4), um ein Strahlungsbündel ($f_0$) zu erzeugen, das eine anfängliche Strahlungsintensität aufweist, und von Mitteln (3) zum Erzeugen einer Interferenz zwischen einem ersten Teil (F1) des Strahlungsbündels, der von dem ersten Spiegel (1) reflektiert wird, und einem zweiten Teil (F2) des Strahlungsbündels, der von einem zweiten Spiegel (2) reflektiert wird; und
- Anordnen eines Detektors (7), um gleichzeitig die ersten (F1) und zweiten (F2) Teile des Strahlungsbündels zu empfangen, nachdem die Teile des Bündels jeweils von den ersten und zweiten Spiegeln reflektiert wurden, und um eine Strahlungsintensität zu messen, die durch die Interferenz erzeugt wird;

so dass die eweiligen Lichtwege der ersten (F1) und zweiten (F2) Teile des Strahlungsbündels zwischen der Quelle (4) und dem Detektor (7) Längen aufweisen, die bei der Fahrt des mobilen Elements (10) unterschiedlich variieren, wobei die Fahrt des mobilen Elements somit selber eine Variation der Intensität erzeugt, die von dem Detektor gemäß einer ersten Frequenz gemessen wird, wenn die anfängliche Intensität ($A_0$) des Strahlungsbündels ($f_0$), das von der Quelle erzeugt wird, konstant ist;
wobei das Verfahren **dadurch gekennzeichnet ist, dass** es ferner folgende Schritte umfasst:

1) während der Fahrt des mobilen Elements (10): Modulieren der anfänglichen Intensität ($A_0$) des Strahlungsbündels ($f_0$), das von der Quelle (4) erzeugt wird, gemäß einer zweiten Frequenz ($f_0$), und gleichzeitiges Aktivieren des Detektors (7); und dann
2) Bestimmen der Fahrgeschwindigkeit des mobilen Elements (10) aus einer Spektralkomponente der Strahlungsintensität, die von dem Detektor (7) während der Fahrt des mobilen Elements gemessen wird, wobei die Spektralkomponente mit einer Differenz zwischen der ersten Frequenz und der zweiten Frequenz verknüpft ist,
und dass die zweite Frequenz ($f_0$), mit der die anfängliche Intensität der Quelle (4) moduliert wird, einem Zielwert der Fahrgeschwindigkeit des mobilen Elements (10) entspricht, und wobei die Fahrgeschwindigkeit des mobilen Elements in Abhängigkeit von der Differenz zwischen der ersten Frequenz und der zweiten Frequenz geregelt wird.

**2.** Verfahren nach Anspruch 1, wobei der erste Spiegel (1), der zweite Spiegel (2) und die Mittel (3) zum Erzeugen der Interferenz ein Michelson-Interferometer bilden.

**3.** Verfahren nach Anspruch 1 oder 2, wobei Schritt /2/ wiederum folgende Teilschritte umfasst:

/2.1/ Filtern eines Messsignals, das von dem Detektor (7) erzeugt wird, um die Spektralkomponente der Strahlungsintensität auszuwählen, die von dem Detektor gemessen wird, die mit der Differenz zwischen der ersten Frequenz und der zweiten Frequenz verknüpft ist;
/2.2/ Berechnen einer Fourier-Transformation des gefilterten Messsignals, um eine Spektralverteilung des gefilterten Messsignals zu bestimmen; und
/2.3/ Bestimmen einer Mittenfrequenz ($f_c$) der Spektralverteilung, wobei die Mittenfrequenz gleich der Differenz zwischen der ersten Frequenz und der zweiten Frequenz ist.

**4.** Verfahren nach einem der Ansprüche 1 bis 3, das verwendet wird, um die Fahrgeschwindigkeit des mobilen Elements (10) zu messen, wenn das mobile Element eine Drehbewegung um eine Achse (Z-Z) herum ausführt.

**5.** Verfahren nach Anspruch 4, wobei der zweite Spiegel (2) auch an das mobile Element (10) angeschlossen ist, um gemäß einer zweiten Spiegelverlagerung während der Fahrt des mobilen Elements mitgenommen zu werden.

**6.** Verfahren nach Anspruch 5, wobei der erste Spiegel (1) und der zweite Spiegel (2) retroreflektierende Spiegel sind, die in einem gleichen Abstand (R) der Drehachse (Z-Z) des mobilen Elements mit dem mobilen Element (10) starr verbunden sind.

**7.** Verfahren nach Anspruch 6, wobei der erste Spiegel (1) und der zweite Spiegel (2) Würfelkantenspiegel oder Würfeleckenspiegel sind.

**8.** Verfahren nach einem der vorhergehenden Ansprüche, wobei das mobile Element (10) einen Spiegel umfasst, der vor einem optischen Eingang eines Teleskops angeordnet ist oder einen Teil eines schwenkbaren Trägers, auf dem das Teleskop befestigt ist, umfasst, wobei es Schritt 2 des Verfahrens ermöglicht, eine Abtastgeschwindigkeit eines Eingangsfeldes des Teleskops abzuleiten.

**9.** Verfahren nach einem der vorhergehenden Ansprüche, wobei die Fahrgeschwindigkeit des mobilen Elements (10) in Abhängigkeit von der absoluten Differenz zwischen der ersten Frequenz und der zweiten Frequenz ($f_0$) geregelt wird, indem eine Regelungsvorspannung $f_{offset}$ ungleich null verwendet wird, so dass ein Zielwert $\omega_{cible}$ für die Fahrgeschwindigkeit des mobilen Elements (10) $\omega_{cible} = (f_0 + f_{offset}) \cdot \lambda/4R$ ist, wenn der Regelparameter die Abweichung der absoluten Differenz $|f-f_0|$ im Verhältnis zu $f_{offset}$ ist.

**Claims**

**1.** Method of measuring a displacement speed of a mobile element (10), comprising the following steps:

- connecting a first mirror (1) to the mobile element so that said first mirror is driven in a first mirror displacement during the displacement of said mobile element;
- arranging a source (4) in order to produce a radiation beam (F0) having an initial radiation intensity, and means (3) for producing an interference between a first part (F1) of said radiation beam reflected by the first mirror (1) and a second part (F2) of said radiation beam reflected by a second mirror (2); and
- arranging a detector (7) for simultaneously receiving the first (F1) and second (F2) parts of the radiation beam after said beam parts have been reflected respectively by the first and second mirrors, for measuring a radiation intensity produced by the interference;
so that respective optical paths of the first (F1) and second (F2) parts of the radiation beam have lengths between the source (4) and the detector (7) which vary differently during the displacement of the mobile element (10), said displacement of the mobile element thus itself producing a variation in the intensity measured by the detector at a first frequency when the initial intensity ($A_0$) of the radiation beam (F0) produced by the source is constant; said method being **characterised in that** it further comprises the following steps:

/1/ during the displacement of the mobile element (10): modulating the initial intensity ($A_0$) of the radiation beam (F0) produced by the source (4) at a second frequency ($f_0$) and simultaneously activating the detector (7); then

/2/ determining the displacement speed of the mobile element (10) from a spectral component of the radiation intensity measured by the detector (7) during said displacement of the mobile element, said spectral component being correlated with a difference between said first frequency and said second frequency,

and the second frequency ($f_0$) with which the initial intensity of the source (4) is modulated corresponds to a target value for the displacement speed of the mobile element (10), and whereby said displacement speed of the mobile element is automatically controlled as a function of the difference between said first frequency and said second frequency.

2. Method as claimed in claim 1, whereby the first mirror (1), the second mirror (2) and the means (3) for producing the interference form a Michelson interferometer.

3. Method as claimed in claim 1 or 2, whereby step /2/ itself comprises the following sub-steps:

/2-1/ filtering a measurement signal produced by the detector (7) so as to select the spectral component of the radiation intensity measured by said detector, correlated with the difference between the first frequency and the second frequency;
/2-2/ calculating a Fourier transform of the filtered measurement signal so as to determine a spectral distribution of said filtered measurement signal; and
/2-3/ determining a central frequency (fc) of said spectral distribution, said central frequency being equal to the difference between said first frequency and said second frequency.

4. Method as claimed in any one of claims 1 to 3, used to measure the displacement speed of the mobile element (10) when said mobile element effects a rotating movement about an axis (Z-Z).

5. Method as claimed in claim 4, in which the second mirror (2) is also connected to the mobile element (10) so as to be driven in a second mirror displacement during the displacement of said mobile element.

6. Method as claimed in claim 5, in which the first mirror (1) and the second mirror (2) are retro-reflecting mirrors rigidly connected to the mobile element (10) at a same distance (R) from the axis of rotation (Z-Z) of said mobile element.

7. Method as claimed in claim 6, in which the first mirror (1) and the second mirror (2) are edge cube mirrors or corner cube mirrors.

8. Method as claimed in any one of the preceding claims, whereby the mobile element (10) comprises a mirror disposed in front of an optical entry of a telescope or comprises a part of a an orientable support on which the telescope is mounted, step /2/ of said method enabling a scanning speed of an input field of the telescope to be derived.

9. Method as claimed in any one of the preceding claims, whereby the displacement speed of the mobile element (10) is automatically controlled as a function of the absolute difference between the first frequency and the second frequency ($f_0$) using a control bias $f_{offset}$ that is not zero, so that a target value $\omega_{target}$ for the displacement speed of the mobile element (10) is $\omega_{target} = (fo + f_{offset}) \cdot \lambda/4R$ where the control parameter is the deviation of the absolute difference $|f-f_0|$ relative to $f_{offset}$.

**FIG. 1**

EP 2 470 916 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2261299 A
- JP 61062885 A
- US 6133993 A